# EUROPÄISCHE PATENTSCHRIFT

(11) **EP 3 727 073 B1**
(45) Veröffentlichungstag und Bekanntmachung des Hinweises auf die Patenterteilung: **12.04.2023**
(21) Anmeldenummer: 18816047.7
(22) Anmeldetag: 10.12.2018
(51) Int. Cl.: A44B 11/25

(54) **BELEUCHTETES GURTSCHLOSS FÜR EINE SICHERHEITSGURTEINRICHTUNG EINES KRAFTFAHRZEUGES**
ILLUMINATED SAFETY BELT BUCKLE FOR A SAFETY BELT DEVICE OF A MOTOR VEHICLE
BOUCLE DE CEINTURE ÉCLAIRÉE POUR SYSTÈME DE CEINTURE DE SÉCURITÉ D'UN VÉHICULE AUTOMOBILE

(30) Priorität: 20.12.2017 DE 102017223457
(43) Veröffentlichungstag der Anmeldung: 28.10.2020
(73) Patentinhaber: Autoliv Development AB, 447 83 Vårgårda (SE)
(72) Erfinder: SÖHNCHEN, Arndt, 22765 Hamburg (DE); ROTARIU, Iulian, 25337 Kölln-Reisiek (DE)
(74) Vertreter: Müller Verweyen
(86) Internationale Anmeldenummer: PCT/EP2018/084154
(87) Internationale Veröffentlichungsnummer: WO 2019/121095

(56) Entgegenhaltungen:
- WO-A1-2016/097089
- DE-A1-102009 047 937
- DE-A1-102014 016 520
- DE-A1-102016 204 961
- US-A1- 2017 001 557

## Beschreibung

Die vorliegende Erfindung betrifft ein beleuchtetes Gurtschloss für eine Sicherheitsgurteinrichtung eines Kraftfahrzeuges mit den Merkmalen des Oberbegriffs von Anspruch 1.

Gurtschlösser für Sicherheitsgurteinrichtungen von Kraftfahrzeugen dienen im Allgemeinen dazu, eine auf einem Gurtband verschieblich geführte oder mit einem Ende eines Gurtbandes fest verbundene Gurtzunge fahrzeugfest zu verriegeln. Dazu weist das Gurtschloss einen Einführschlitz für die Gurtzunge und eine über eine Drucktaste lösbare Verriegelungsmechanik auf. Die Verriegelungsmechanik ist federbelastet und verriegelt die Gurtzunge beim Einführen in den Einführschlitz selbsttätig. Zum Lösen der Gurtzunge drückt der Insasse die Drucktaste herunter, wodurch die Verriegelungsmechanik gelöst und die Gurtzunge durch eine freigegebene Federkraft der Verriegelungsmechanik ausgeworfen wird.

Solche Gurtschlösser sind bereits seit langem Stand der Technik. Ein Problem derartiger Gurtschlösser ist es, dass der Insasse zum Anschnallen den verhältnismäßig schmalen Einführschlitz des Gurtschlosses auffinden muss, in welchen er die Gurtzunge zum Anschnallen des Sicherheitsgurtes einführt.

Aus der DE 39 04 125 A1 ist es bekannt, an dem Gurtschloss eine Lichtquelle vorzusehen, welche über ein lichtleitendes Material an vorbestimmte Lichtabstrahlflächen des Gurtschlosses angekoppelt ist. Die Lichtabstrahlflächen sind hier die Drucktaste selbst und eine an einer der Drucktaste gegenüberliegenden Seitenfläche des Einführschlitzes angeordnete Abstrahlfläche. Da die Drucktaste für ihre Funktion verschiebbar ausgeführt werden muss, muss das in der Drucktaste fest angeordnete lichtleitende Material so in der Drucktaste positioniert sein, dass die Lichteintrittsfläche des lichtleitenden Materials in der nicht gedrückten Stellung der Drucktaste lichttechnisch mit der externen Lichtquelle verbunden ist. Sofern die Lichteintrittsfläche des lichtleitenden Materials in dieser Stellung aufgrund von herstellungsbedingten Formabweichungen oder mechanischen Einflüssen lichttechnisch nicht mit der externen Lichtquelle verbunden ist, wird das Licht nicht oder nicht vollständig in die Drucktaste eingeleitet, so dass die Drucktaste selbst nicht oder schwächer leuchtet als dies gewünscht ist.

Aus der DE 10 2007 047 704 A1 ist es ferner bekannt, in dem Gurtschloss einen Lichtleiter vorzusehen, welcher wenigstens zwei Lichtabstrahlflächen aufweist, die an den Enden des Einführschlitzes angeordnet sind. Die Lichtabstrahlflächen selbst sind dreieckförmig ausgebildet und in einer freien dreieckförmigen Fläche der Stirnseite des Gehäuses zwischen dem Rand des Gehäuses und einer konischen Seitenfläche der Drucktaste angeordnet. Dabei sind die Lichtabstrahlflächen insbesondere so bemessen, dass sie die freien Flächen in den Ecken der Stirnseite des Gehäuses möglichst großflächig zur Erzielung einer möglichst großen Leuchtkraft ausfüllen.

Die DE 10 2016 204 961 A1 offenbart ein beleuchtetes Gurtschloss für eine Sicherheitsgurteinrichtung in einem Kraftfahrzeug. Das beleuchtete Gurtschloss umfasst ein Gehäuse, eine im Gehäuse verschiebbare Drucktaste und einen durch einen Randabschnitt des Gehäuses und die Drucktaste begrenzten Einführschlitz zum Einführen einer Gurtzunge. An dem beleuchtbaren Gurtschloss ist eine Lichtquelle vorgesehen, welche mit einem Lichtleiter gekoppelt ist, wobei sich der Lichtleiter ausgehend von der Lichteintrittsfläche in zwei voneinander getrennte Äste verzweigt.

Aus der Druckschrift WO 2016/097089 A1 ist ferner ein beleuchtetes Gurtschloss bekannt, welches eine ringförmige Lichtaustrittsfläche aufweist, die die Betätigungstaste und/oder den Einführschlitz umlaufend umschließt.

Aufgabe der Erfindung ist es, bei einem beleuchteten Gurtschloss der gattungsgemäßen Art eine besonders effiziente und gleichmäßige Ausleuchtung der Lichtabstrahlfläche zu erreichen und die Gefahr einer Verschmutzung oder Beschädigung des Lichtleiters zu verringern.

Zur Lösung der Aufgabe wird ein beleuchtetes Gurtschloss mit den Merkmalen des Anspruchs 1 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass zwischen den Ästen des Lichtleiters ein Abschirmelement angeordnet ist, welches den Lichtleiter zumindest gegenüber einem Gehäuseteil des Gehäuses oder einem Gehäuseteil des Gehäuses und einem Hohlraum im Inneren des Gehäuses, in welchem die Drucktaste angeordnet ist, abschirmt.

Der Vorteil der vorgeschlagenen Lösung liegt darin, dass Streulicht in dem Gehäuse vermieden wird. Dadurch kann eine bessere Lichtausbeute an der oder den Abstrahlflächen des beleuchteten Gurtschlosses erreicht werden. Ferner wird Streulicht vermieden, welches ansonsten aus dem Schlitz zum Einführen der Gurtzunge austreten könnte. Dadurch kann der Kontrast an den Abstrahlflächen verbessert und somit das Auffinden des Einführschlitzes erleichtert werden. Ferner schützt das Abschirmelement den Lichtleiter und die Lichtquelle vor Schmutz, Staub oder Flüssigkeit, welche durch Trennfugen zwischen den Gehäuseteilen oder durch den Einführschlitz für die Gurtzunge in das Gehäuse eindringen kann.

Für einige Anwendungsfälle ist es vorteilhaft, wenn der Lichtleiter eine der Lichtquelle zugeordnete Lichteintrittsfläche und zwei voneinander getrennte Lichtabstrahlflächen aufweist, wobei sich der Lichtleiter ausgehend von der Lichteintrittsfläche in zwei voneinander getrennte Äste verzweigt, wobei jeweils eine der Lichtabstrahlflächen einem der Äste zugeordnet ist. Dadurch kann die Lichtquelle in einem größeren Abstand von der Lichtaustrittsfläche angeordnet werden. Durch die vorgeschlagene Lösung wird das in den Lichtleiter eingekoppelte Licht auf zwei Lichtaustrittsflächen verteilt und aus diesen in die beiden Lichtleitkörper eingekoppelt. Der Lichtleiter bildet damit praktisch eine Verzweigung des von der Lichtquelle ausgehenden Lichtstromes. Dadurch kann eine einzige Lichtquelle zur Ausleuchtung der beiden Lichtabstrahlflächen genutzt werden. Der Lichtleiter verzweigt sich dabei ausgehend von der Lichteintrittsfläche in zwei voneinander getrennte Äste, wobei jeweils eine der Lichtaustrittsflächen einem der Äste zugeordnet ist. Die Äste des Lichtleiters dienen einer separaten Führung der beiden nach der Verzweigung voneinander getrennten Lichtströme zu den Lichteintrittsflächen der Lichtleitkörper. Dabei können die Äste des Lichtleiters beliebig geformt und durch eine flexible Ausbildung der Lichtleiter in dem Gurtschloss in Abhängigkeit von den zur Verfügung stehenden Platzverhältnissen beliebig verlegt werden.

Gemäß einer bevorzugten Ausführungsform der Erfindung wird vorgeschlagen, dass das Abschirmelement den Lichtleiter gegenüber einer Unterkappe des Gehäuses abschirmt. Durch eine Abschirmung des Lichtleiters gegenüber der Unterkappe des Gehäuses wird der bezüglich einer potenziellen Beschädigung des Lichtleiters oder Streulicht kritische Teil des beleuchteten Gurtschlosses abgeschirmt.

In einer bevorzugten Ausführungsform des beleuchteten Gurtschlosses ist vorgesehen, dass das Abschirmelement in seiner Formgebung an die Form des Lichtleiters angepasst ist. Dadurch wird eine besonders effiziente Abschirmung des Lichtleiters gegen Beschädigungen und Schmutzeintrag erreicht. Zudem kann durch ein an den Lichtleiter angepasstes Abschirmelement der Hohlraum im Inneren des Gehäuses im Wesentlichen erhalten bleiben, sodass es hinreichend viel Platz gibt, den Verriegelungsmechanismus des Gurtschlosses sowie den Drucktaster in diesem Bereich anzuordnen.

Gemäß einer bevorzugten Ausführungsform des beleuchteten Gurtschlosses ist vorgesehen, dass der Lichtleiter eine Form aufweist, welche in einem ersten Abschnitt parallel zu einer Stirnfläche des Gehäuses verläuft und in einem zweiten Abschnitt in einen von dem Gehäuse umschlossenen Hohlraum des Gurtschlosses eintaucht. Dadurch kann zum einen eine großflächige Abstrahlfläche durch den ersten Abschnitt erzielt werden, welche vorzugsweise direkt entlang der Kontur des Einführschlitzes für die Gurtzunge verläuft, zum anderen ist aber durch den zweiten Abschnitt des Lichtleiters eine einfache Aufnahme und Zentrierung des Lichtleiters in einem Spritzgusswerkzeug möglich, wodurch der Lichtleiter positionsgenau aufgenommen werden kann. Somit können fertigungsbedingte Toleranzen und Streuungen verringert werden. Ferner wird die Gefahr, dass der Lichtleiter im Fertigungs- oder Montageprozess beschädigt wird, reduziert.

Bevorzugt ist dabei, wenn sich der erste Abschnitt über ein Winkelsegment von 180° bis 320° erstreckt. Dadurch ist der erste Abschnitt hinreichend groß, um eine komplette Ausleuchtung zumindest entlang des Einführschlitzes zu ermöglichen, wodurch das Auffinden des Einführschlitzes erleichtert wird. Ferner ist keine vollständig umlaufende Abstrahlfläche gegeben, wodurch die Aufnahme und Zentrierung des Lichtleiters in einem Spritzgusswerkzeug erleichtert wird.

Besonders bevorzugt ist dabei, wenn sich der erste Abschnitt über einen Winkelbereich von 240° bis 300° erstreckt. Besonders vorteilhaft ist ein Winkelbereich von 240° bis 300°, da in einem solchen Winkelbereich sowohl eine Ausleuchtung parallel des Einführschlitzes als auch an den jeweils kurzen Seitenkanten des Einführschlitzes möglich ist. Dabei wird durch einen Umlauf von max. 300° erreicht, dass hinreichend Abstand zwischen den beiden Enden der Abstrahlfläche besteht, um den Drucktaster sowie den Schließmechanismus zwischen diesen beiden Enden anzuordnen. Somit wird die Gefahr einer Beschädigung des Lichtleiters bei der Montage des beleuchteten Gurtschlosses reduziert.

Ferner ist mit Vorteil vorgesehen, dass an dem Gehäuse eine Stirnfläche ausgebildet ist, in welche die Gurtzunge zur Verriegelung eingeführt wird, wobei der Lichtleiter und/oder die Lichtabstrahlfläche(n) eine aus der Ebene der Stirnfläche versetzte Ringform aufweisen. Durch einen gegenüber der Stirnfläche zurückgesetzten Bereich des Lichtleiters ist ebenfalls eine vereinfachte Aufnahme des Lichtleiters in einem Spritzgusswerkzeug möglich.

In einer bevorzugten Ausführungsform der Erfindung ist vorgesehen, dass der Lichtleiter und das Abschirmelement einteilig ausgeführt sind. Durch eine einteilige Ausführung können die Montage des beleuchteten Gurtschlosses vereinfacht und die Herstellkosten für das Gurtschloss reduziert werden.

Bevorzugt ist dabei, wenn der Lichtleiter und das Abschirmelement in einem Zwei-Komponenten-Spritzguss-Verfahren hergestellt sind. Eine besonders einfache und kostengünstige Herstellmethode ist ein Zwei-Komponenten-Spritzguss, bei dem der Lichtleiter aus einem optisch leitenden ersten Kunststoffmaterial und das Abschirmelement aus einem entsprechend optisch abschirmenden zweiten Kunststoffmaterial hergestellt werden.

Alternativ ist mit Vorteil vorgesehen, dass der Lichtleiter und das Abschirmelement durch einen Spritzgussprozess stoffschlüssig und/oder formschlüssig miteinander verbunden sind. Alternativ zu einem Zwei-Komponenten-Spritzguss-Verfahren ist es möglich, den Lichtleiter in einem ersten Spritzgussprozess und das Abschirmelement in einem nachgeschalteten zweiten Spritzgussprozess herzustellen und die Bauteile in diesem zweiten Spritzgussprozess stoffschlüssig und/oder formschlüssig miteinander zu verbinden. Dazu kann an dem Lichtleiter eine entsprechende Formgebung, insbesondere eine entlang der Lichtleitrichtung verlaufende Nut vorgesehen sein, um den Formschluss zwischen dem Lichtleiter und dem Abschirmelement zu verbessern.

Besonders bevorzugt ist das, wenn der Lichtleiter aus einem Polycarbonat oder einem Polymethylmethacrylat (PMMA) hergestellt ist. Polycarbonat oder Polymethylmethacrylat sind formstabile, transparente Kunststoffe, welche lichtleitend sind und vergleichsweise unempfindlich gegenüber mechanischen Beschädigungen. Dabei lassen sich Polycarbonat und Polymethylmethacrylat in einem Spritzgussprozess verarbeiten, sodass eine einfache und kostengünstige Herstellung eines solchen Lichtleiters möglich ist.

In einer alternativen Ausführungsform der Erfindung ist mit Vorteil vorgesehen, dass das Abschirmelement formschlüssig mit dem Lichtleiter verbunden ist. Durch eine formschlüssige Verbindung wird erreicht, dass sich das Abschirmelement nach der Montage nicht mehr gegenüber dem Lichtleiter verschiebt und somit dauerhaft seine Funktion erfüllen kann. Besonders bevorzugt ist ein reversibel beschädigungsfrei lösbarer Formschluss in Form einer Clip-Verbindung zwischen dem Lichtleiter und dem Abschirmelement. Dadurch kann ein fehlerhaftes oder beschädigtes Bauteil einfach ausgewechselt werden, wodurch insbesondere in der Montage die Fehlerkosten reduziert werden können.

Alternativ ist eine kraftschlüssige Verbindung des Abschirmelements zwischen zumindest zwei Gehäuseteilen oder einem Gehäuseteil und dem Lichtleiter vorgesehen. Dabei wird das Abschirmelement vorzugsweise derart eingeklemmt, dass es auch bei den üblichen betriebsbedingten Belastungen eines Gurtschlosses positionssicher an seinem Ort verbleibt und somit zuverlässig die Abschirmfunktion erfüllen kann.

In einer bevorzugten Ausführungsform der Erfindung ist vorgesehen, dass der Lichtleiter formschlüssig mit einem Gehäuseteil, insbesondere mit einer Gehäuseschale, des Gehäuses verbunden ist. Durch eine formschlüssige Verbindung des Lichtleiters mit dem Gehäuse kann eine exakte Positionierung des Lichtleiters erreicht werden. Dadurch können mögliche Beschädigungen eines losen Astes des Lichtleiters durch eine in das Gurtschloss eingeführte Gurtzunge vermieden werden.

Gemäß einer vorteilhaften Ausführungsform des beleuchteten Gurtschlosses ist vorgesehen, dass der Abstand der Äste im unbelasteten Ausgangszustand größer als die innere Gehäusebreite des Gehäuses ist, sodass sich beim Einschieben des Lichtleiters in das Gehäuse eine Vorspannung der Äste ergibt. Dadurch ergibt sich eine Presspassung, welche die Äste des Lichtleiters formstabil an den Wänden des Gehäuses anliegen lässt. Ferner werden auf diese Art und Weise Spalte vermieden, welche zu zusätzlichem Streulicht führen können und einer zusätzlichen Abschirmung bedürfen.

In einer weiteren Verbesserung der Erfindung ist vorgesehen, dass das Abschirmelement aus einem Elastomer besteht oder von einem Elastomer ummantelt ist. Durch ein Abschirmelement aus einem Elastomer bzw. ein mit einem Elastomer ummanteltes Abschirmelement kann eine Abdichtung der Elektronik des beleuchteten Gurtschlosses gegen in das Gurtschloss eindringende Flüssigkeit erreicht werden. Somit kann neben dem mechanischen Schutz und der Reduzierung des Streulichts auf einem weiteren Weg das Ausfallrisiko der Beleuchtung des Gurtschlosses reduziert werden.

Gemäß einer vorteilhaften Weiterbildung des beleuchteten Gurtschlosses ist vorgesehen, dass die Lichtabstrahlfläche eine linienförmige Kontur aufweist, deren Form an die Formgebung einer in Blickrichtung auf den Einführschlitz seitlich angeordneten Randseite der Drucktaste angepasst ist. Dabei wird das Betätigen der Drucktaste dadurch erleichtert, dass das Gurtschloss sowohl in der angeschnallten Normalstellung als auch in der nicht belasteten bzw. nicht angeschnallten Stellung eine Grundausrichtung aufweist, in welcher die Drucktaste immer an derselben Seite der Lichtabstrahlfläche angeordnet ist. Da der Einführschlitz wiederum immer in einer festen Ausrichtung zu der Drucktaste angeordnet ist, kann auch dieser dadurch für den Anschnallvorgang vereinfacht aufgefunden werden.

In einer bevorzugten Ausführungsform sind an dem beleuchteten Gurtschloss zwei Lichtabstrahlflächen vorgesehen, welche an unterschiedlichen, gegenüberliegenden Randseiten der Drucktaste angeordnet sind. Die Drucktaste wird dadurch von den zwei Lichtabstrahlflächen beidseitig umrahmt, so dass die Position der Drucktaste zwischen den Lichtabstrahlflächen eindeutig definiert ist und damit bei leuchtenden Lichtabstrahlflächen besonders einfach aufgefunden werden kann. Dazu muss die Drucktaste selbst nicht erkennbar sein, der Insasse muss lediglich mit dem Finger auf die zwischen den leuchtenden Lichtabstrahlflächen befindliche Fläche drücken, um die Gurtzunge zu lösen und den Abschnallvorgang einzuleiten.

Alternativ ist mit Vorteil vorgesehen, dass die Lichtabstrahlfläche als ein vorzugsweise durchgängiges, in einem Teilsegment um die Drucktaste umlaufendes Band ausgebildet ist. Dadurch wird eine besonders einfache Bedienung der Drucktaste beim Abschnallvorgang möglich, da der Insasse die Drucktaste dadurch besonders gut auffinden kann, dass er lediglich auf einen Punkt innerhalb der durch das durchgängig umlaufende Band begrenzten Fläche drücken muss.

Erfindungsgemäß wird ein Verfahren zur Herstellung eines beleuchteten Gurtschlosses für eine Sicherheitsgurteinrichtung eines Kraftfahrzeuges vorgeschlagen. Dabei weist das beleuchtete Gurtschloss ein Gehäuse, eine in dem Gehäuse verschiebbare Drucktaste, einen durch einen Randabschnitt des Gehäuses und die Drucktaste begrenzten Einführschlitz zum Einführen einer in dem Gurtschloss verriegelbaren Gurtzunge sowie wenigstens eine Lichtquelle und wenigstens einen Lichtleiter auf, wobei sich der Lichtleiter ausgehend von einer Lichteintrittsfläche in zwei voneinander getrennte Äste verzweigt, welche mit mindestens einer Lichtabstrahlfläche gekoppelt sind. Erfindungsgemäß ist dabei vorgesehen, dass zwischen den Ästen des Lichtleiters ein Abschirmelement angeordnet wird, welches den Lichtleiter zumindest gegenüber einem Gehäuseteil des Gehäuses oder einem Gehäuseteil des Gehäuses und einem Hohlraum im Inneren des Gehäuses, in welchem die Drucktaste angeordnet ist, abschirmt. Durch ein entsprechendes Verfahren ist eine einfache und kostengünstige Herstellung eines beleuchteten Gurtschlosses möglich, welches die aus dem Stand der Technik bekannten Nachteile überwindet.

Die Erfindung wird im Folgenden anhand bevorzugter Ausführungsformen unter Bezugnahme auf die beigefügten Figuren erläutert. Gleiche Bauteile oder Bauteile mit gleicher Funktion sind dabei in den Figuren mit gleichen Bezugszeichen gekennzeichnet. Dabei zeigt
- Fig. 1: ein Gehäuse eines beleuchteten Gurtschlosses mit einem zweiästigen Lichtleiter und zwei Lichtabstrahlflächen;
- Fig. 2: einen Lichtleiter eines erfindungsgemäßen, beleuchteten Gurtschlosses, welcher durch ein Abschirmelement zumindest abschnittsweise abgedeckt ist;
- Fig. 3: eine weitere Darstellung eines erfindungsgemäßen beleuchteten Gurtschlosses;
- Fig. 4: eine Draufsicht auf ein erfindungsgemäßes beleuchtetes Gurtschloss, bei dem das obere Gehäuseteil entfernt wurde;
- Fig. 5: eine weitere Draufsicht auf ein erfindungsgemäßes beleuchtetes Gurtschloss, bei dem das obere Gehäuseteil entfernt wurde;
- Fig. 6: eine Frontansicht auf eine Stirnfläche eines erfindungsgemäßen beleuchteten Gurtschlosses;
- Fig. 7: ein alternatives Ausführungsbeispiel eines beleuchteten Gurtschlosses; und
- Fig. 8: einen alternativen Lichtleiter für ein erfindungsgemäßes beleuchtetes Gurtschloss.

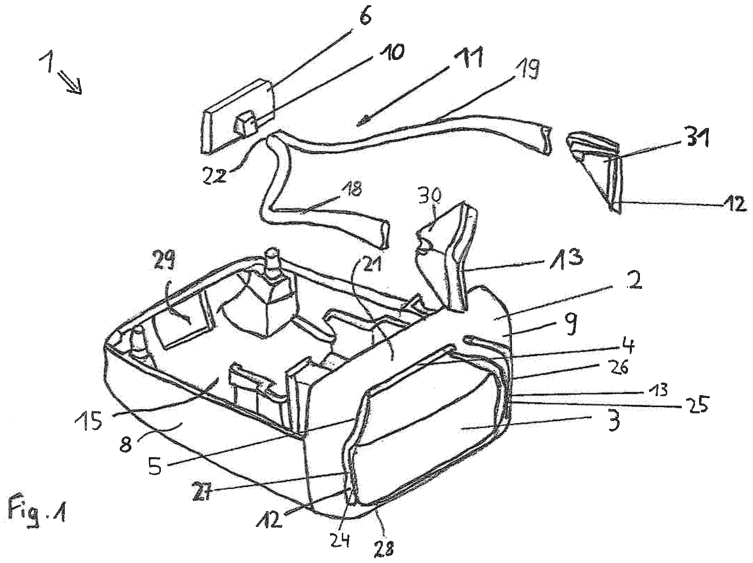

In der Fig. 1 ist eine Hälfte eines Gehäuses 2 eines beleuchteten Gurtschlosses 1 einer Sicherheitsgurteinrichtung für ein Fahrzeug zu erkennen. In dem Gehäuse 2 ist eine Drucktaste 3 vorgesehen, welche in dem Gehäuse 2 verschiebbar geführt und durch eine Öffnung 28 an der Stirnseite 5 des Gehäuses 2 zugänglich ist. In dem Gehäuse 2 ist ferner eine der Übersicht halber nicht dargestellte Verriegelungsmechanik vorgesehen, welche durch Herunterdrücken der Drucktaste 3 bzw. Einschieben der Drucktaste 3 in das Gehäuse 2 gelöst werden kann. Die zu erkennende Hälfte des Gehäuses 2 wird nach der Montage der Verriegelungsmechanik durch eine zweite nicht dargestellte Hälfte vervollständigt, so dass die Verriegelungsmechanik zu allen Seiten hin von dem Gehäuse 2 umfasst ist.

Die Drucktaste 3 und die Öffnung 28 des Gehäuses 2 sind so bemessen, dass zwischen der Drucktaste 3 und einem Randabschnitt 21 des Gehäuses 2 ein Einführschlitz 4 vorhanden ist, in welchen eine Gurtzunge der Sicherheitsgurteinrichtung zur Verriegelung in der Verriegelungsmechanik des Gurtschlosses einführbar ist. Der Einführschlitz 4 ist seitlich durch die Drucktaste 3 an einer Seite und an der anderen Seite durch den Randabschnitt 21 des Gehäuses 2 begrenzt. Seitlich der Drucktaste 3 sind in dem Gehäuse 2 zwei Schlitze 26 und 27 vorgesehen, welche einen an den Verlauf der angrenzenden Randseiten 24 und 25 der Drucktaste 3 angepassten Verlauf aufweisen. Die Form der Öffnung 28 in dem Gehäuse 2 entspricht zumindest in etwa der Querschnittsform der Drucktaste 3, so dass die Schlitze 26 und 27 auch parallel zu den die Öffnung 28 bildenden Rändern des Gehäuses 2 verlaufen. Ferner ist an der von der Öffnung 28 abgewandten Seite der Hälfte des Gehäuses 2 eine einseitig offene Aufnahme 29 vorgesehen, in welcher eine Trägerplatte 6 mit einer darauf befestigten Lichtquelle 10, vorzugsweise in Form einer LED, befestigbar ist. Neben der Lichtquelle 10 können auf der Trägerplatte 6 zusätzlich auch verschiedene Speicher- und Rechenmodule zur Ansteuerung der Lichtquelle 10 und/oder zur Verarbeitung weiterer Signale, wie z.B. eines Gurtschlossschalters, vorgesehen sein. Dabei ist insbesondere ein Modul zum Farbwechsel vorgesehen, wobei das beleuchtete Gurtschloss 1 durch das Modul zum Farbwechsel bei einer nicht in den Einführschlitz 4 eingesteckten Gurtzunge rot beleuchtet ist und bei einer eingesteckten Gurtzunge weiß, grün oder in einer von Rot verschiedenen Farbe passend zur Innenraumbeleuchtung oder Armaturentafelbeleuchtung des Kraftfahrzeuges beleuchtet ist.

Weiterhin sind ein Lichtleiter 11 und zwei Lichtabstrahlelemente 30 und 31 in dem Gehäuse 2 vorgesehen. Die Lichtabstrahlelemente 30 und 31 sind aus einem formstabilen, transparenten Kunststoff, wie z.B. Polycarbonat oder PMMA, mit lichtleitenden Eigenschaften ausgebildet. Die Lichtabstrahlflächen sind in ihrer Formgebung den Schlitzen 26 und 27 angepasst, so dass die Lichtabstrahlelemente 30 und 31 jeweils von der Innenseite des Gehäuses 2 in einen der Schlitze 26 und 27 eingesteckt werden können. Alternativ können die Lichtabstrahlelemente 30 und 31 aber auch in einem 2K-Spritzverfahren zumindest teilweise von dem Kunststoff des Gehäuses 2 umspritzt werden. Bevorzugt ist der Lichtleiter 11 zumindest weitestgehend von einem Luftspalt umgeben, um eine maximale Lichtausbeute zu erzielen.

Der Lichtleiter 11 weist eine Lichteintrittsfläche 22 auf, welche in der befestigten Stellung des Lichtleiters 11 der Lichtquelle 10 gegenüberliegt, so dass das von der Lichtquelle 10 abgestrahlte Licht in den Lichtleiter 11 eintritt. Ausgehend von der Lichteintrittsfläche 22 wird das von der Lichtquelle 10 abgestrahlte Licht zunächst in einem Anfangsabschnitt des Lichtleiters 11 bis zu einer Verzweigungsstelle weitergeleitet, in der sich der Lichtleiter 11 in zwei Äste 18 und 19 verzweigt. Das Licht wird dann in den Ästen 18 und 19 weiter jeweils bis zu einer Lichtabstrahlfläche 12 und 13 an den Stirnseiten der Äste 18 und 19 weitergeleitet. Die Äste 18 und 19 sind so bemessen und in sich flexibel, dass sie in dem Hohlraum 15 des Gehäuses 2 entsprechend der zur Verfügung stehenden Bauraumverhältnisse in einem gekrümmten Verlauf verlegt werden können. Das von der Lichtquelle 10 ausgesendete Licht wird damit zunächst durch die Lichteintrittsfläche 22 in den Lichtleiter 11 eingeleitet, dann weiter durch die Äste 18 und 19 bis zu den Lichtabstrahlflächen 12 und 13 weitergeleitet. Die vorgeschlagene Lösung der Verwendung einer zentralen Lichtquelle 10, einem Lichtleiter 11 und den beiden Lichtabstrahlelementen 30 und 31 weist den Vorteil auf, dass die Lichtquelle 10 mit der Trägerplatte 6 an einem zur Halterung und Kontaktierung günstigen Ort angeordnet werden kann, und dass das Licht über den Lichtleiter 11 und die Lichtabstrahlelemente 30 und 31 an einen vorbestimmten Ort geleitet und dort abgestrahlt werden kann. Dadurch können die Platzierung der Lichtquelle 10 und der Ort der Lichtabstrahlflächen 12 und 13 praktisch unabhängig voneinander gewählt werden. Alternativ können die Lichtabstrahlflächen 12 und 13 aber auch durch selbstleuchtende, elektrisch aktivierbare Folien oder durch gasgefüllte Lichtquellen gebildet sein.

Die Lichtabstrahlflächen 12 und 13 sind linienförmig ausgebildet und weisen einen an die angrenzenden Randseiten 24 und 25 der Drucktaste 3 angepassten Verlauf auf. Ferner erstrecken sich die Lichtabstrahlflächen 12 und 13 bis zu den Enden des Einführschlitzes 4 und schließen den Einführschlitz 4 zwischen sich ein. Die Lichtabstrahlflächen 12 und 13 und der Einführschlitz 4 bilden dadurch praktisch eine die Drucktaste 3 an drei Seiten umfassende Linie. Dabei weisen die Lichtabstrahlflächen 12 und 13 bevorzugt eine identische oder kleinere Breite als der Einführschlitz 4 auf, so dass der Insasse den Einführschlitz 4 mit der Gurtzunge in jedem Fall trifft, wenn er die Gurtzunge mit der Stirnseite über eine die Lichtabstrahlflächen 12 und 13 miteinander verbindende Position positioniert und dann in Richtung des Gurtschlosses bewegt. Ferner umfassen die Lichtabstrahlflächen 12 und 13 die in der Öffnung 28 des Gehäuses 2 befindliche Stirnfläche durch die Drucktaste 3, so dass der Insasse die Drucktaste 3 auch bei Dunkelheit sehr einfach treffen kann, indem er einfach auf die Fläche zwischen den Lichtabstrahlflächen 12 und 13 drückt.

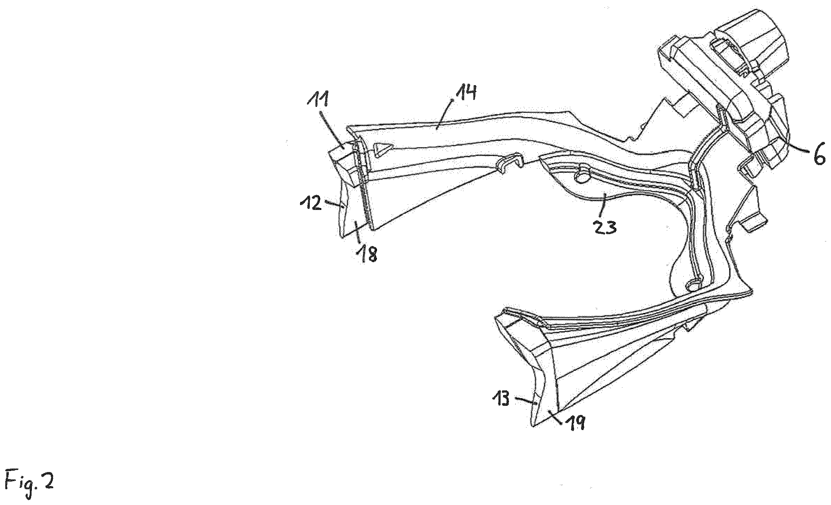

In Fig. 2 ist der Lichtleiter 11 eines erfindungsgemäßen, beleuchteten Gurtschlosses 1 dargestellt. Der Lichtleiter 11 weist eine Lichteintrittsfläche 22 auf, welche mit einer an einer Trägerplatte 6 angeordneten Lichtquelle 10 gekoppelt ist. Der Lichtleiter 11 verzweigt sich ausgehend von der Lichteintrittsfläche 22 nach Art eines Geweihs in zwei Äste 18 und 19, wodurch die Versorgung von zwei Lichtabstrahlflächen 12 und 13 möglich ist. Alternativ ist auch eine weitere Verzweigung des Lichtleiters in mehr als zwei Äste, insbesondere in drei oder vier Äste möglich, dabei ist vorgesehen, dass die Äste 18 und 19 sich jeweils noch einmal verzweigen, und so insgesamt vier Äste mit vier Lichtabstrahlflächen ausbilden.

Zwischen den Ästen 18 und 19 des Lichtleiters 11 ist ein Abschirmelement 14 angeordnet, welches an die Form des Lichtleiters 11 angepasst ist. Dabei ist das Abschirmelement 14 an den jeweils dem Gehäuse 2 abgewandten Seiten des Lichtleiters 11 angeordnet und weist gegenüber diesen Flächen eine Überdeckung von mindestens 100%, vorzugsweise von 120% - 200%, auf, um den Lichtleiter 11 effizient vor mechanischer Beschädigung zu schützen und gleichzeitig Streulicht, welches ansonsten in den Hohlraum 15 im Inneren des Gehäuses 2 eintreten könnte, abzuschirmen. Ferner kann das Abschirmelement die Lichtquelle 10 sowie weitere auf der Trägerplatte 6 angeordnete Elektronik zur Steuerung der Lichtquelle gegen in das Gurtschloss 1 eindringende Feuchtigkeit abschirmen, und somit die Haltbarkeit des beleuchteten Gurtschlosses 1 verbessern.

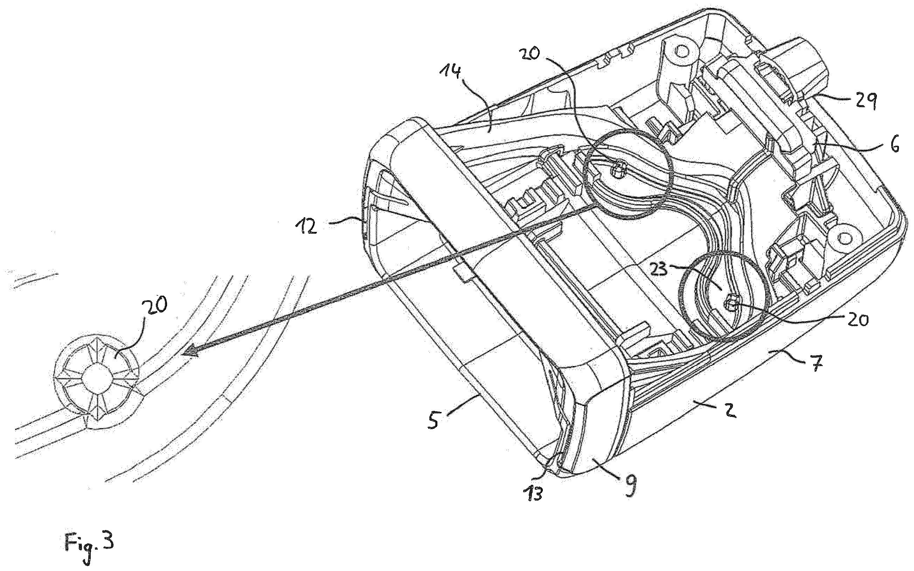

In Fig. 3 ist ein erfindungsgemäßes beleuchtetes Gurtschloss 1 in einer dreidimensionalen Darstellung gezeigt. Dabei sind an dem Gehäuse 2 Pins 20 ausgebildet, welche eine Spreizung des Lichtleiters 11 und/oder des Abschirmelements 14 bewirken. Dadurch können der Lichtleiter 11 und/oder das Abschirmelement 14 positionssicher in einer festen Position fixiert werden. Zudem können die offenen Enden der Äste 18, 19 durch die Spreizung gegen das Gehäuse 2 gedrückt werden, sodass die Äste 18, 19 an dem jeweiligen Gehäusesteil 7, 8 anliegen. Ferner kann an dem Abschirmelement 14 eine Aufnahme 23 ausgebildet sein, über welche sich das Abschirmelement 14 formschlüssig mit den Pins 20 verbinden lässt.

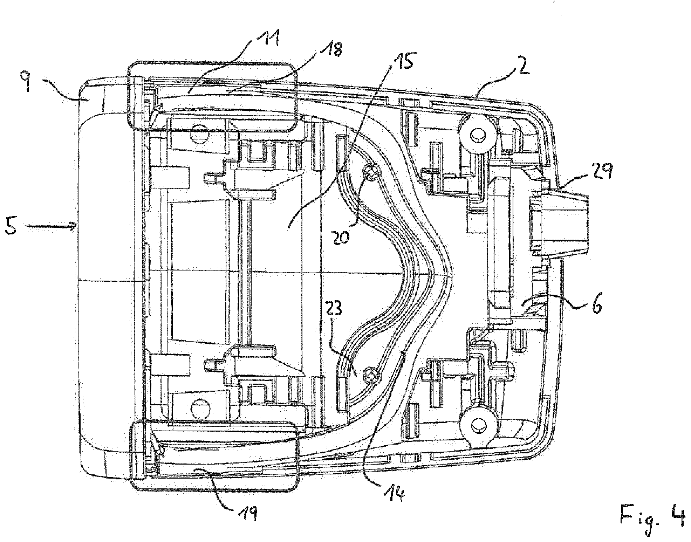

Fig. 4 zeigt eine Draufsicht auf ein geöffnetes Gehäuse 2 eines erfindungsgemäßen, beleuchteten Gurtschlosses 1. Dabei haben die Äste 18, 19 des Lichtleiters 11 durch die Vorspannung ein Übermaß gegenüber der Innenbreite des Gehäuses 2, sodass sich eine Presspassung ergibt. Dadurch liegen die offenen Enden der Äste 18, 19 an dem Gehäuse 2 an. Zusätzlich oder alternativ können die Äste 18, 19 durch einen Formschluss mit dem Gehäuse 2 geführt werden. Das Vorspannen der Äste 18, 19 erfolgt dabei wie in Fig. 3 dargestellt durch eine Aufnahme 23 an dem Abschirmelement 14, durch welches die Äste 18, 19 im Bereich der Lichtquelle 10 gespreizt und fixiert werden.

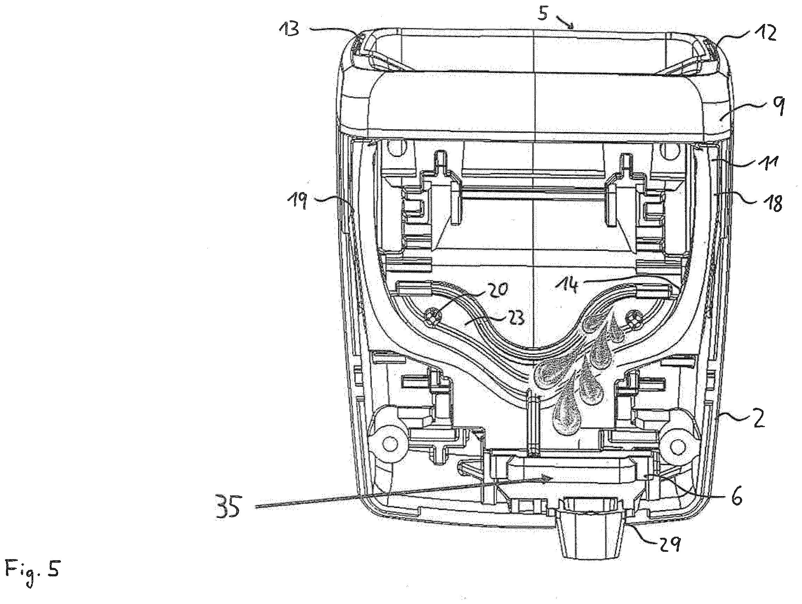

Fig. 5 zeigt eine weitere Draufsicht auf ein erfindungsgemäßes beleuchtetes Gurtschloss 1. Dabei ist zu erkennen, dass das Abschirmelement 14 neben seiner Funktion der Abschirmung von Streulicht aus der Lichtquelle 10 und/oder dem Lichtleiter 11 auch als zusätzliche Abdichtung dient, um die Elektrik des beleuchteten Gurtschlosses 1 trocken zu halten und in das Gehäuse 2 eingedrungene Flüssigkeit von der Elektronik des beleuchteten Gurtschlosses fernzuhalten. Dabei können das Trägerelement 5, die Lichtquelle 10 sowie weitere Elektronik zur Steuerung der Beleuchtung des beleuchteten Gurtschlosses 1 in einer Beleuchtungseinheit 35 zusammengefasst sein.

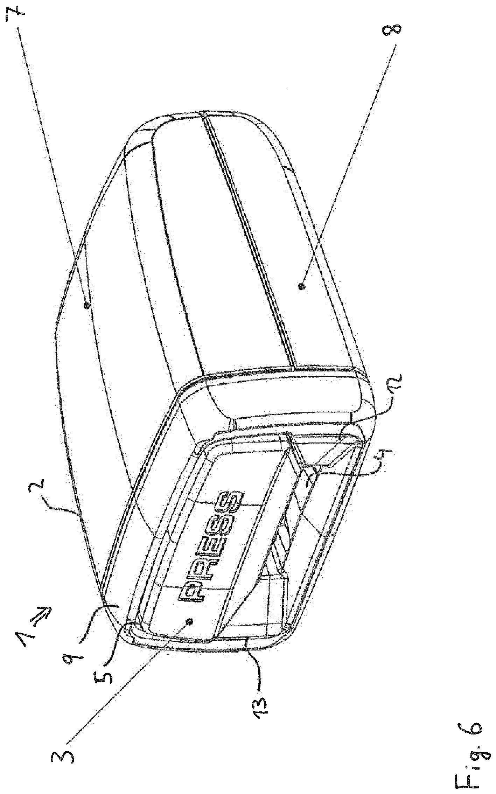

Fig. 6 zeigt eine Frontansicht auf eine Stirnfläche 5 des beleuchteten Gurtschlosses 1. Dabei ist zu erkennen, dass in einem Deckel 9 des Gehäuses 2 eine Öffnung 28 ausgebildet ist, in welcher eine nicht dargestellte Drucktaste 3 angeordnet wird. Ferner ist eine Ausnehmung an dem Deckel 9 zu erkennen, an welcher zwischen der Drucktaste 3 und dem Deckel 9 ein Einführschlitz 4 entsteht, in welchen eine Gurtzunge einführbar ist. An dem Deckel 9 sind zwei Lichtabstrahlflächen 12, 13 ausgebildet, welche das Auffinden des Einführschlitzes 4 erleichtern. Der Deckel 9 ist vorzugsweise aus einem lichtundurchlässigen Kunststoff ausgeführt, während die Lichtabstrahlflächen 12, 13 aus einem lichtleitenden Kunststoff, insbesondere einem Polycarbonat oder einem PMMA ausgeführt sind und den Abschluss der Äste 18, 19 des Lichtleiters 11 bilden.

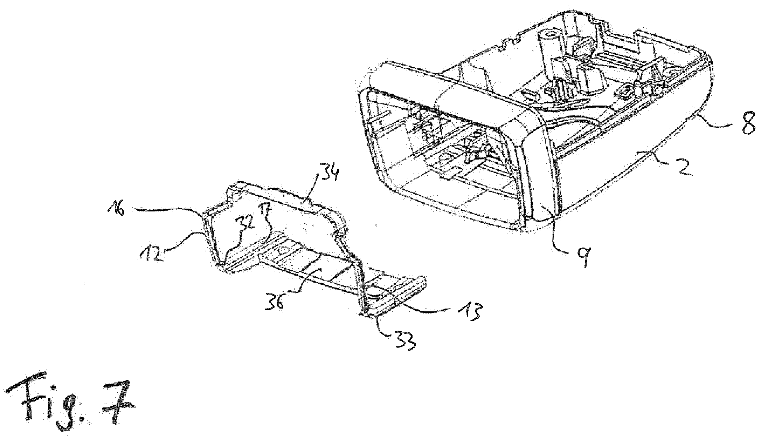

In Fig. 7 ist ein weiteres Ausführungsbeispiel für ein erfindungsgemäßes beleuchtetes Gurtschloss 1 dargestellt. Bei im Wesentlichen gleichem Aufbau wie zu Fig. 1 bis 6 ausgeführt, ist in den Deckel 9 ein Einsatzelement 36 eingesetzt. Das Einsatzelement 36 weist einen umlaufenden Ringabschnitt 34 auf, an welchem die Lichtabstrahlflächen 12, 13 ausgebildet sind. Dabei weist der umlaufende Ringabschnitt 34 einen ersten Abschnitt 16 auf, welcher parallel zu der Stirnfläche 5 des Gurtschlosses 1 verläuft und einen zweiten Abschnitt 17, welcher aus der Ebene der Stirnfläche 5 in das Gurtschloss 1 eintaucht. Der umlaufende Ringabschnitt 34 an der Stirnfläche 5 verläuft über eine Segment von etwa 270° parallel zu der Stirnfläche 5, wobei er an den jeweiligen Ende 32, 33 des Ringabschnitts 34 senkrecht zur Stirnfläche 5 des Gehäuses 2 in das Gehäuse 2 eintaucht. Durch die Formgebung des Lichtleiters 11 ist eine vereinfachte Anbindung an die Lichtabstrahlflächen 12, 13 des Einsatzelements 36 möglich. Durch den umlaufenden Ringabschnitt 34 und den zweiten Abschnitt 17, welcher vorzugsweise senkrecht zur Ebene der Stirnfläche 5 ausgebildet ist, ist eine erleichterte Aufnahme und Zentrierung des Einsatzelements 36 in einem Spritzgusswerkzeug möglich.

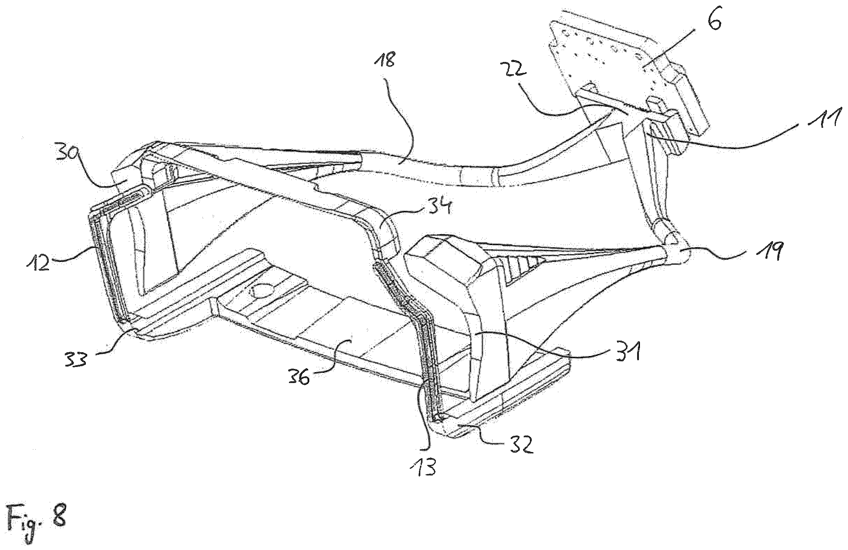

In Fig. 8 ist ein weiteres Ausführungsbeispiel eines Lichtleiters 11 eines erfindungsgemäßen beleuchteten Gurtschlosses 1 dargestellt. Der Lichtleiter 11 verzweigt sich ausgehend von einer Lichteintrittsfläche 22 in einen ersten Ast 18 und einen zweiten Ast 19, an deren Enden jeweils ein Lichtabstrahlelement 30, 31 ausgebildet ist. Das aus den Lichtabstrahlelementen 30, 31 austretende Licht wird in den umlaufenden Ringabschnitt 34 des Einsatzelements 36 eingekoppelt und über die Lichtabstrahlflächen 12, 13 emittiert. Durch eine formschlüssige und/oder kraftschlüssige Aufnahme des Einsatzelements 36 in dem Gehäuse 2 ist eine einfache Zentrierung des Einsatzelements 36 zum Lichtleiter 11 möglich, sodass die Lichtausbeute optimiert werden kann.

## Patentansprüche

1. Beleuchtetes Gurtschloss (1) für eine Sicherheitsgurteinrichtung eines Kraftfahrzeuges mit
- einem Gehäuse (2),
- einer in dem Gehäuse (2) verschiebbaren Drucktaste (3),
- einem durch einen Randabschnitt (21) des Gehäuses (2) und die Drucktaste (3) begrenzten Einführschlitz (4) zum Einführen einer in dem Gurtschloss (1) verriegelbaren Gurtzunge,
- wenigstens einer Lichtquelle (10) und wenigstens einem Lichtleiter (11), wobei
- der Lichtleiter (11) ausgehend von einer Lichteintrittsfläche (22) mit mindestens einer Lichtabstrahlfläche (12, 13) gekoppelt ist,
**dadurch gekennzeichnet, dass**
- an dem Lichtleiter (11) ein Abschirmelement (14) angeordnet ist, welches den Lichtleiter (11) zumindest gegenüber einem Gehäuseteil (7, 8, 9) des Gehäuses (2) oder gegenüber einem Gehäuseteil (7,8,9) des Gehäuses (2) und einem Hohlraum (15) im Inneren des Gehäuses (2), in welchem die Drucktaste (3) angeordnet ist, abschirmt.

2. Beleuchtetes Gurtschloss (1) nach Anspruch 1, **dadurch gekennzeichnet, dass** sich der Lichtleiter (11) ausgehend von einer Lichteintrittsfläche (22) in zwei voneinander getrennte Äste (18, 19) verzweigt.

3. Beleuchtetes Gurtschloss (1) nach Anspruch 2, **dadurch gekennzeichnet, dass**
- das Abschirmelement (14) zwischen den Ästen (18, 19) des Lichtleiters (11) angeordnet ist.

4. Beleuchtetes Gurtschloss (1) nach einem der Ansprüche 1 bis 3, **dadurch gekennzeichnet, dass**
- das Abschirmelement (14) den Lichtleiter (11) gegenüber einer Unterkappe (8) des Gehäuses (2) abschirmt.

5. Beleuchtetes Gurtschloss (1) nach einem der Ansprüche 1 bis 4, **dadurch gekennzeichnet, dass**
- das Abschirmelement (14) in seiner Formgebung an die Form des Lichtleiters (11) angepasst ist.

6. Beleuchtetes Gurtschloss (1) nach einem der Ansprüche 1 bis 5, **dadurch gekennzeichnet, dass**
- der Lichtleiter (11) eine Form aufweist, welche in einem ersten Abschnitt (16) parallel zu einer Stirnfläche (5) des Gehäuses (2) verläuft, und in einem zweiten Abschnitt (17) in einen von dem Gehäuse (2) umschlossenen Hohlraum (15) des Gurtschlosses (1) eintaucht.

7. Beleuchtetes Gurtschloss (1) nach Anspruch 6, **dadurch gekennzeichnet, dass**
- sich der erste Abschnitt über ein Winkelsegment (α) von 180° bis 320°, vorzugsweise von 240° bis 300°, erstreckt.

8. Beleuchtetes Gurtschloss (1) nach einem der Ansprüche 1 bis 7, **dadurch gekennzeichnet, dass**
- an dem Gehäuse eine Stirnfläche (5) ausgebildet ist, in welche die Gurtzunge zur Verriegelung eingeführt wird, wobei
- der Lichtleiter (11) und/oder die Lichtabstrahlfläche(n) (12, 13) eine aus der Ebene der Stirnfläche (5) versetzte Ringform aufweisen.

9. Beleuchtetes Gurtschloss (1) nach einem der Ansprüche 1 bis 8, **dadurch gekennzeichnet, dass**
- der Lichtleiter (11) und das Abschirmelement (14) einteilig ausgeführt sind.

10. Beleuchtetes Gurtschloss (1) nach Anspruch 9, **dadurch gekennzeichnet, dass**
- der Lichtleiter (11) und das Abschirmelement (14) in einem Zwei-Komponenten-Spritzguss-Verfahren hergestellt sind oder durch einen Spritzgussprozess stoffschlüssig miteinander verbunden sind.

11. Beleuchtetes Gurtschloss (1) nach Anspruch 10, **dadurch gekennzeichnet, dass**
- der Lichtleiter (11) aus einem Polycarbonat oder einem Polymethylmethacrylat (PMMA) hergestellt ist.

12. Beleuchtetes Gurtschloss (1) nach einem der Ansprüche 1 bis 8, **dadurch gekennzeichnet, dass**
- das Abschirmelement (14) formschlüssig mit dem Lichtleiter (11) verbunden ist.

13. Beleuchtetes Gurtschloss (1) nach einem der Ansprüche 1 bis 12, **dadurch gekennzeichnet, dass**
- der Lichtleiter (11) formschlüssig mit einem Gehäuseteil (7, 8, 9) des Gehäuses (2) verbunden ist.

14. Beleuchtetes Gurtschloss (1) nach einem der Ansprüche 1 bis 13, **dadurch gekennzeichnet, dass**
- der Abstand der Äste (18, 19) im unbelasteten Ausgangszustand größer als die innere Gehäusebreite (B) des Gehäuses (2) ist, sodass sich beim Einschieben des Lichtleiters (11) in das Gehäuse (2) eine Vorspannung der Äste (18, 19) ergibt.

15. Beleuchtetes Gurtschloss (1) nach einem der Ansprüche 1 bis 14, **dadurch gekennzeichnet, dass**
- das Abschirmelement (14) aus einem Thermoplast besteht.

16. Verfahren zur Herstellung eines beleuchteten Gurtschlosses (2) für eine Sicherheitsgurteinrichtung eines Kraftfahrzeuges mit
- einem Gehäuse (2),
- einer in dem Gehäuse (2) verschiebbaren Drucktaste (3),
- einem durch einen Randabschnitt (21) des Gehäuses (2) und die Drucktaste (3) begrenzten Einführschlitz (4) zum Einführen einer in dem Gurtschloss (1) verriegelbaren Gurtzunge,
- wenigstens einer Lichtquelle (10) und wenigstens einem Lichtleiter (11), wobei
- sich der Lichtleiter (11) ausgehend von einer Lichteintrittsfläche (22) in zwei voneinander getrennte Äste (18, 19) verzweigt, welche mit mindestens einer Lichtabstrahlfläche (12, 13) gekoppelt sind,
**dadurch gekennzeichnet, dass**
- zwischen den Ästen (18, 19) des Lichtleiters (11) ein Abschirmelement (14) angeordnet wird, welches den Lichtleiter (11) zumindest gegenüber einem Gehäuseteil (7, 8, 9) des Gehäuses (2) oder gegenüber einem Gehäuseteil (7,8,9) des Gehäuses (2) und einem Hohlraum (15) im Inneren des Gehäuses (2), in welchem die Drucktaste (3) angeordnet ist, abschirmt.

## Claims

1. Illuminated belt buckle (1) for a safety belt device of a motor vehicle with
- a housing (2),
- a push-button (3) displaceable in the housing (2),
- an insertion slot (4), bordered by an edge section (21) of the housing (2) and the push-button (3), for inserting a latch plate lockable in the belt buckle (1),
- at least one light source (10) and at least one light guide (11), wherein
- the light guide (11) is coupled to at least one light-emitting surface (12, 13) starting from a light entry surface (22),
**characterized in that**
- arranged on the light guide (11) is a shielding element (14) which shields the light guide (11) at least from a housing part (7, 8, 9) of the housing (2) or from a housing part (7, 8, 9) of the housing (2) and a cavity (15) in the interior of the housing (2) in which the push-button (3) is arranged.

2. Illuminated belt buckle (1) according to Claim 1, **characterized in that** the light guide (11) branches from a light entry surface (22) into two branches (18, 19) separate from one another.

3. Illuminated belt buckle (1) according to Claim 2, **characterized in that**
- the shielding element (14) is arranged between the branches (18, 19) of the light guide (11).

4. Illuminated belt buckle (1) according to any one of Claims 1 to 3,
**characterized in that**
- the shielding element (14) shields the light guide (11) from an undercap (8) of the housing (2).

5. Illuminated belt buckle (1) according to any one of Claims 1 to 4,
**characterized in that**
- the shaping of the shielding element (14) is adapted to the shape of the light guide (11).

6. Illuminated belt buckle (1) according to any one of Claims 1 to 5,
**characterized in that**
- the light guide (11) has a shape which extends in a first section (16) in parallel to a front face (5) of the housing (2) and dips in a second section (17) into a cavity (15) of the belt buckle (1) enclosed by the housing (2).

7. Illuminated belt buckle (1) according to Claim 6, **characterized in that**
- the first section extends over an angular segment (α) of 180° to 320°, preferably of 240° to 300°.

8. Illuminated belt buckle (1) according to any one of Claims 1 to 7,
**characterized in that**
- a front face (5), into which the latch plate is inserted for locking, is formed on the housing, wherein
- the light guide (11) and/or the light-emitting surface(s) (12, 13) have an annular shape which is offset from the plane of the front face (5).

9. Illuminated belt buckle (1) according to any one of Claims 1 to 8,
**characterized in that**
- the light guide (11) and the shielding element (14) are integral.

10. Illuminated belt buckle (1) according to Claim 9, **characterized in that**
- the light guide (11) and the shielding element (14) are produced in a two-component injection-molding process or are integrally bonded to one another by an injection-molding process.

11. Illuminated belt buckle (1) according to Claim 10, **characterized in that**
- the light guide (11) is made of a polycarbonate or a polymethyl methacrylate (PMMA).

12. Illuminated belt buckle (1) according to any one of Claims 1 to 8,
**characterized in that**
- the shielding element (14) is connected in a form fit to the light guide (11).

13. Illuminated belt buckle (1) according to any one of Claims 1 to 12,
**characterized in that**
- the light guide (11) is connected in a form fit to a housing part (7, 8, 9) of the housing (2).

14. Illuminated belt buckle (1) according to any one of Claims 1 to 13,
**characterized in that**
- the distance between the branches (18, 19) in the unloaded initial state is greater than the inner housing width (B) of the housing (2) so that the branches (18, 19) are prestressed when the light guide (11) is inserted into the housing (2).

15. Illuminated belt buckle (1) according to any one of Claims 1 to 14,
**characterized in that**
- the shielding element (14) consists of a thermoplastic.

16. Method for producing an illuminated belt buckle (2) for a safety belt device of a motor vehicle, having
- a housing (2),
- a push-button (3) displaceable in the housing (2),
- an insertion slot (4), bordered by an edge section (21) of the housing (2) and the push-button (3), for inserting a latch plate lockable in the belt buckle (1),
- at least one light source (10) and at least one light guide (11), wherein
- the light guide (11) branches from a light entry surface (22) into two branches (18, 19) which are separated from one another and which are coupled to at least one light-emitting surface (12, 13),
**characterized in that**
- arranged between the branches (18, 19) of the light guide (11) is a shielding element (14) which shields the light guide (11) at least from a housing part (7, 8, 9) of the housing (2) or from a housing part (7, 8, 9) of the housing (2) and a cavity (15) in the interior of the housing (2) in which the push-button (3) is arranged.

## Revendications

1. Boucle de ceinture éclairée (1) pour un dispositif de ceinture de sécurité d'un véhicule automobile, comportant
- un boîtier (2),
- un bouton-poussoir (3) pouvant être déplacé dans le boîtier (2),
- une fente d'introduction (4) délimitée par une section de bord (21) du boîtier (2) et le bouton-poussoir (3) et permettant d'introduire une languette de ceinture pouvant être verrouillée dans la boucle de ceinture (1),
- au moins une source de lumière (10) et au moins un guide de lumière (11),
- le guide de lumière (11) étant couplé à au moins une surface d'émission de lumière (12, 13) à partir d'une surface d'entrée de lumière (22),
**caractérisée en ce que**
- un élément de protection (14) est disposé sur le guide de lumière (11), lequel élément de protection protège le guide de lumière (11) au moins contre une partie de boîtier (7, 8, 9) du boîtier (2) ou contre une partie de boîtier (7, 8, 9) du boîtier (2) et une cavité (15) à l'intérieur du boîtier (2) dans laquelle est disposé le bouton-poussoir (3).

2. Boucle de ceinture éclairée (1) selon la revendication 1,
**caractérisée en ce que** le guide de lumière (11) se ramifie en deux branches (18, 19) séparées l'une de l'autre à partir d'une surface d'entrée de lumière (22).

3. Boucle de ceinture éclairée (1) selon la revendication 2,
**caractérisée en ce que**
- l'élément de protection (14) est disposé entre les branches (18, 19) du guide de lumière (11).

4. Boucle de ceinture éclairée (1) selon l'une des revendications 1 à 3, **caractérisée en ce que**
- l'élément de protection (14) protège le guide de lumière (11) contre un capot inférieur (8) du boîtier (2).

5. Boucle de ceinture éclairée (1) selon l'une des revendications 1 à 4,
**caractérisée en ce que**
- la forme de l'élément de protection (14) est adaptée à la forme du guide de lumière (11).

6. Boucle de ceinture éclairée (1) selon l'une des revendications 1 à 5,
**caractérisée en ce que**
- le guide de lumière (11) présente une forme s'étendant dans une première section (16) parallèlement à une face frontale (5) du boîtier (2) et plongeant dans une seconde section (17) dans une cavité (15) de la boucle de ceinture (1) entourée par le boîtier (2).

7. Boucle de ceinture éclairée (1) selon la revendication 6,
**caractérisée en ce que**
- la première section s'étend sur un segment angulaire (α) de 180° à 320°, de préférence de 240° à 300°.

8. Boucle de ceinture éclairée (1) selon l'une des revendications 1 à 7,
**caractérisée en ce que**
- une face frontale (5) est formée sur le boîtier, dans laquelle la languette de ceinture est insérée pour le verrouillage,
- le guide de lumière (11) et/ou la ou les surfaces d'émission de lumière (12, 13) présentant une forme annulaire décalée par rapport au plan de la face frontale (5).

9. Boucle de ceinture éclairée (1) selon l'une des revendications 1 à 8,
**caractérisée en ce que**
- le guide de lumière (11) et l'élément de protection (14) sont réalisés d'une seule pièce.

10. Boucle de ceinture éclairée (1) selon la revendication 9,
**caractérisée en ce que**
- le guide de lumière (11) et l'élément de protection (14) sont fabriqués selon un procédé de moulage par injection à deux composants ou sont reliés l'un à l'autre par complémentarité de forme par un processus de moulage par injection.

11. Boucle de ceinture éclairée (1) selon la revendication 10,
**caractérisée en ce que**
- le guide de lumière (11) est fabriqué à partir d'un polycarbonate ou d'un polyméthacrylate de méthyle (PMMA).

12. Boucle de ceinture éclairée (1) selon l'une des revendications 1 à 8,
**caractérisée en ce que**
- l'élément de protection (14) est relié par complémentarité de forme au guide de lumière (11).

13. Boucle de ceinture éclairée (1) selon l'une des revendications 1 à 12, **caractérisée en ce que**
- le guide de lumière (11) est relié par complémentarité de forme à une partie de boîtier (7, 8, 9) du boîtier (2).

14. Boucle de ceinture éclairée (1) selon l'une des revendications 1 à 13,
**caractérisée en ce que**
- l'espacement des branches (18, 19) à l'état initial déchargé est supérieur à la largeur de boîtier intérieure (B) du boîtier (2), de sorte que lors de l'insertion du guide de lumière (11) dans le boîtier (2), une précontrainte des branches (18, 19) est produite.

15. Boucle de ceinture éclairée (1) selon l'une des revendications 1 à 14, **caractérisée en ce que**
- l'élément de protection (14) est en matière thermoplastique.

16. Procédé de fabrication d'une boucle de ceinture éclairée (2) pour un dispositif de ceinture de sécurité d'un véhicule automobile, comportant
- un boîtier (2),
- un bouton-poussoir (3) pouvant être déplacé dans le boîtier (2),
- une fente d'introduction (4) délimitée par une section de bord (21) du boîtier (2) et le bouton-poussoir (3) et permettant d'introduire une languette de ceinture pouvant être verrouillée dans la boucle de ceinture (1),
- au moins une source de lumière (10) et au moins un guide de lumière (11),
- le guide de lumière (11) se ramifiant en deux branches (18, 19) séparées l'une de l'autre et couplées à au moins une surface d'émission de lumière (12, 13) à partir d'une surface d'entrée de lumière (22),
**caractérisé en ce que**
- un élément de protection (14) est disposé entre les branches (18, 19) du guide de lumière (11), lequel élément de protection protège le guide de lumière (11) au moins contre une partie de boîtier (7, 8, 9) du boîtier (2) ou contre une partie de boîtier (7, 8, 9) du boîtier (2) et une cavité (15) à l'intérieur du boîtier (2) dans laquelle est disposé le bouton-poussoir (3).
